# EUROPEAN PATENT APPLICATION

(11) **EP 2 453 503 A1**
(43) Date of publication of application: **16.05.2012**
(21) Application number: 11762691.1
(22) Date of filing: 25.03.2011
(51) Int. Cl.: H01M 2/30, H01M 10/48, H01R 11/11, H01R 11/12

(54) **BATTERY SYSTEM**

(30) Priority: 29.03.2010 JP 2010074908
(71) Applicant: Mitsubishi Heavy Industries, Ltd., Tokyo 108-8215 (JP)
(72) Inventor: UCHIDA Masataka, Tokyo 108-8215 (JP)
(74) Representative: Bongiovanni, Simone
(86) International application number: PCT/JP2011/057296
(87) International publication number: WO 2011/122460

(57) **Abstract**

A battery system includes an assembled battery, a first terminal, a second terminal, and a measurement part. The first terminal includes a terminal body having at least a portion of an inner circumference contacting an electrode terminal, and two projection plates projecting from an outer circumference of the terminal body toward an outside of the terminal body in a radial direction thereof, and the second terminal includes an insertion hole part into which the projection plates are inserted, wherein the insertion hole part and the projection plates are fitted to each other to reduce a diameter of the first terminal such that the first terminal is fixed to the electrode terminal.

## Description

### Field of the Invention

The present invention relates to a battery system.
This patent application claims priority of Japanese Patent Application No. 2010-074908, filed on March 29, 2010 in the Japanese Patent Office, the entire contents of which are hereby incorporated by reference.

### Background Art

In the related art, in the field of the secondary battery, there is one technique of determining abnormality of an assembled battery by measuring parameter values (i.e., values of parameters), each of that indicates a condition corresponding to a unit cell among unit cells in the assembled battery respectively and each of that is at least one of a voltage value, a current value, or the like, and by finding that one of the parameter values exceeds a threshold value. In addition, there is one technique of avoiding degradation of the assembled battery due to variation in performance of the unit cells by adjusting the variation with a calculated average voltage among the unit cells (See Patent Document 1).

In the above techniques, an electric wire is used in order to measure the parameter value of the unit cell, with an annular plate-shaped contact part. The contact part of the electric wire is fixed to, for example, an electrode terminal of the unit cell with a screw, for measuring the parameter value of the unit cell through the contact part (See Patent Document 2).
In addition, there is another method for fixing the electric wire to the electrode terminal, by inserting the contact part between a bolt for fixing a bus bar and the bus bar (i.e., a conductive body) for connecting terminal electrodes of unit cells adjacent to each other, and by fastening the contact part securely by the bolt.

### Citation List

### Patent Document

[Patent Document 1] Japanese Patent Application Laid-Open No. 2006-136070
[Patent Document 2] Japanese Patent Application Laid-Open No. H11-111358

### Summary of the Invention

### Problems to be Solved by the Invention

However, the related art has the following problems. That is, for example, in Patent Document 2, when the parameter value of the unit cell (i.e., battery) is measured, because the contact part of the electric wire is securely fastened with a screw and fixed to the electrode terminal, contact resistance varies due to the looseness of the screw or the like.
In addition, when the contact part of the electric wire is connected and fixed to an upper part of the bus bar with the bolt, variation in contact resistance between the bus bar and the electrode terminal, as well as variation in contact resistance due to looseness of the bolt, must be considered.
That is, even when the electric wire is connected and fixed by any of the above-described techniques, and the contact part of the electric wire is connected and fixed by using the screw or bolt, variation in contact resistance due to the looseness of the screw or bolt cannot be avoided, and a measurement error may occur when the parameter value of the unit cell is measured. Further, the connection and the fixation with the screw or bolt are complicated, and the connection and the fixation cannot be easily performed in a short time.

The present invention has been made in view of the above-described circumstances, and an object of the invention is to provide a battery system capable of easily connecting and fixing an electric wire to an electrode terminal, and accurately measuring a parameter value such as a current value or a voltage value of a unit cell.

### Means for Solving the Problems

To achieve the above-described object, the present invention employs the following means.
That is, a battery system according to the present invention includes an assembled battery including a plurality of unit cells having electrode terminals; a C-shaped first terminal including a terminal body having at least a portion of its inner circumference contacting the electrode terminal and two projection plates projecting from an outer circumference of the terminal body toward an outside of the terminal body in a radial direction thereof, and inserted into the electrode terminal; a second terminal including an insertion hole part into which the projection plates are inserted, fitted to the first terminal and connected to an electric wire; and a measurement part connected to the electric wire to measure a parameter of the assembled battery, wherein the insertion hole part and the projection plates are fitted to each other to reduce a diameter of the first terminal such that the first terminal is fixed to the electrode terminal.

According to the above configuration, because the inner circumference of the first terminal includes the terminal body in contact with the electrode terminal, the first terminal can be fixed to the electrode terminal to measure a parameter value of the unit cell, without a bus bar, or the like and further without fastening of a bolt or screw. Accordingly, a contact resistance can be reduced to suppress a measurement error, and the parameter value of the unit cell can be more precisely measured.

In addition, as the second terminal and the first terminal are fitted to each other, a diameter of the first terminal is reduced and a contact state between the first terminal and the electrode terminal is fixed. Accordingly, the first terminal can be easily put on the electrode terminal.

### Effects of the Invention

According to a battery system of the present invention, when a parameter value of a unit cell is measured, because a connection terminal unit is not fixed by fastening a bolt or screw, variation in contact resistance can be suppressed.
In addition, the connection terminal unit can be easily put and fixed to the electrode terminal to accurately measure the parameter value of the unit cell.

### [Brief Description of the Drawings]

FIG 1 illustrates a side cross-sectional view of an assembled battery 1 according to a battery system of a first embodiment of the present invention.
FIG 2 illustrates a top cross-sectional view of the assembled battery 1 according to the battery system of the first embodiment of the present invention.
FIG 3 illustrates a perspective view of major parts of the assembled battery 1 according to the battery system of the first embodiment of the present invention.
FIG 4 illustrates an exploded perspective view of an electrode terminal 10 and a connection terminal unit 20 according to the battery system of the first embodiment of the present invention.
FIG 5 illustrates a plan view of a first terminal 21 according to the battery system of the first embodiment of the present invention. FIGS. 5 to 7 are partial views of the first terminal 21 before being fitted to a second terminal 31.
FIG 6 illustrates a front view of the first terminal 21 according to the battery system of the first embodiment of the present invention.
FIG 7 illustrates a side view of the first terminal 21 according to the battery system of the first embodiment of the present invention.
FIG 8 illustrates a plan view for explaining a movement about the connection terminal unit 20 according to the battery system of the first embodiment of the present invention.
FIG 9 illustrates a plan view for explaining a movement about the connection terminal unit 20 according to the battery system of the first embodiment of the present invention.
FIG 10 illustrates a partial cross-sectional view for explaining a movement about the connection terminal unit 20 according to the battery system of the first embodiment of the present invention.
FIG 11 illustrates a partial cross-sectional view for explaining a movement about the connection terminal unit 20 according to the battery system of the first embodiment of the present invention.
FIG 12 illustrates a schematic diagram of the battery system of the first embodiment of the present invention.

### Embodiment(s) for Carrying out the Invention

Hereinafter, an embodiment of the present invention will be described with reference to the accompanying drawings.

### First Embodiment

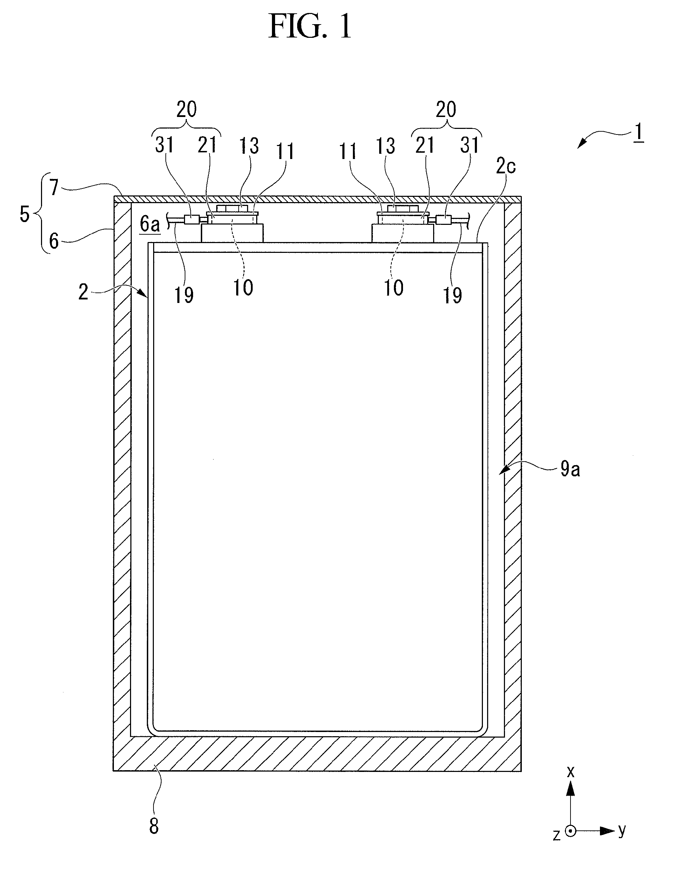

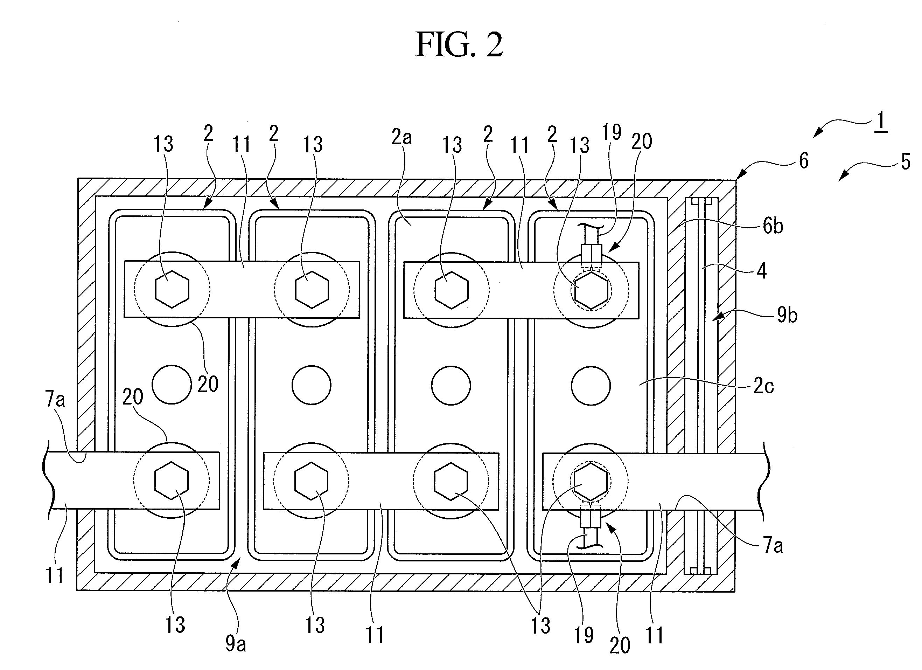

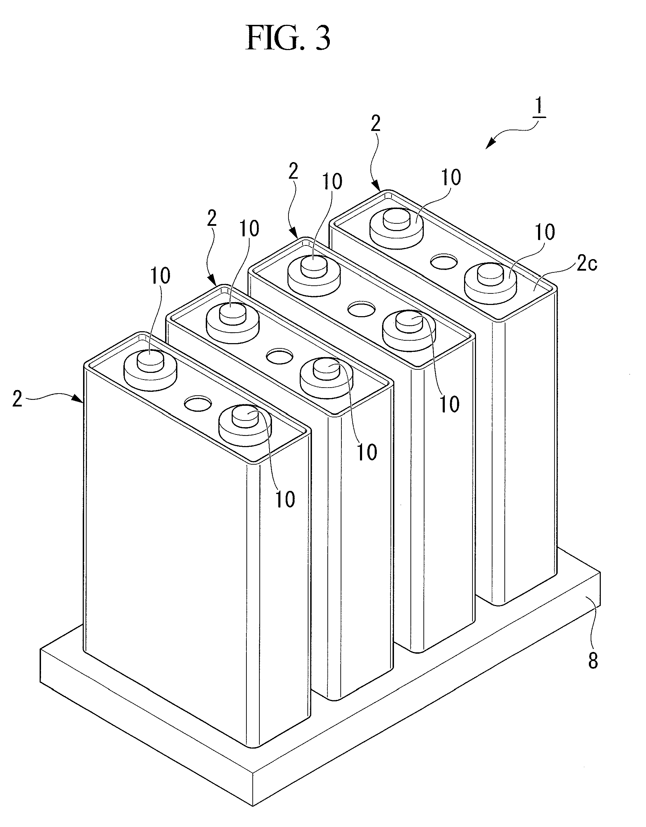

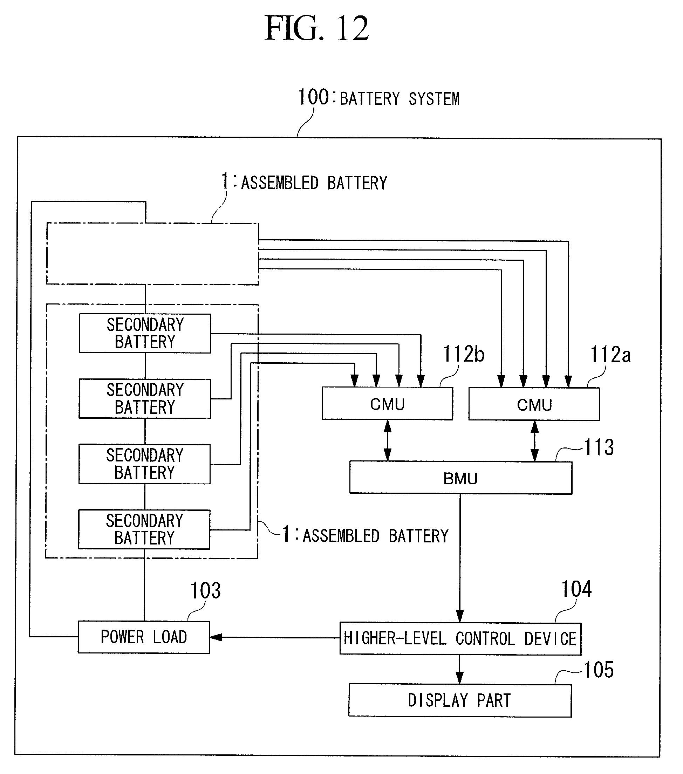

FIG 1 illustrates a side cross-sectional view of an assembled battery 1 according to a battery system 100 of a first embodiment of the present invention shown in FIG 12. FIG 2 illustrates a top cross-sectional view of the assembled battery illustrated in FIG 1, and FIG 3 illustrates a perspective view of major parts of the assembled battery illustrated in FIG 1.
The assembled battery 1, in which a plurality of unit cells 2 as rechargeable secondary batteries are installed, is used in a power supply of a battery system 100, which is, for example, a drive power supply in a movable body such as a bathyscaphe or an electric vehicle, or a power supply in a stationary system such as a power storage device or an uninterruptible power system.
The battery system 100 includes a power load 103 such as an electric motor, an assembled battery, in which two assembled batteries 1 are serially connected to each other for supplying electrical power to the power load 103, cell monitoring units (i.e., CMUs) 112a and 112b for receiving analog signals corresponding to parameters (e.g., voltage) of unit cells (e.g., secondary batteries) 2A to 2F in the assembled battery 1 through electric wires 19 corresponding thereto, a battery management unit (i.e., BMU) 113 for receiving information related to the parameters from the CMUs, and a higher-level control device 104 for controlling the power load 103 based on the information sent from the BMU 113 or for displaying the information to an operator or a driver through a display part 105.

As shown in FIG 2, the assembled battery 1 generally includes the plurality of unit cells 2, a control unit 4 to control the unit cells 2, and a container 5 to store the unit cells 2 and the control unit 4.
As shown in FIGS. 1 and 2, the container 5 includes a lower case 6 formed in a bottomed-prismatic shape and having an opening 6a, in which the unit cells 2 and the control unit 4 are stored, and an upper case 7 as a cover to open/close the opening 6a of the lower case 6. Both of the lower case 6 and the upper case 7 are formed of, for example, an insulating material such as synthetic resin or the like.

As shown in FIG 2, the lower case 6 has a rectangular shape when a bottom wall part 8 thereof is seen from a plan view.
The lower case 6 has a partition wall 6b to divide the inside of the lower case 6 to two chambers in a longitudinal direction thereof, that are a unit cell chamber 9a for storing the plurality of unit cells 2 and a control unit chamber 9b for storing the control unit 4.

The unit cells 2 are secondary batteries such as lithium ion secondary batteries having a rectangular parallelepiped shape as shown in FIG 3, and are arranged on the bottom wall part 8 in the unit cell chamber 9a at predetermined intervals in the longitudinal direction as shown in FIG 2. In addition, in FIG 3, other members (i.e., parts other than the bottom wall part 8 of the lower case 6) of the container 5 are not shown.
A pair of electrode terminals 10, having a cylindrical shape and protruding upward, are formed at an upper surface 2c of the unit cell 2. One of the electric terminals 10 is a positive electrode, and the other of the electric terminals 10 is a negative electrode.

As shown in FIG 2, the positive electrodes and the negative electrodes are alternately arranged in the longitudinal direction. In addition, in an example shown in FIG 2, the electrode terminals of the adjacent unit cells 2 are electrically and serially connected to each other by a bus bar 11 formed of a conductive material and having a plate shape.
As to the unit cells 2 arranged at both ends of the plurality of unit cells 2 in the longitudinal direction, as shown in FIG 2, there are two electrode terminals 10, that are not connected to the adjacent unit cell 2. Each of the two electrode terminals 10 is connected to one end of the corresponding bus bar 11 respectively. And for example, each of the other ends of the bus bars 11 is exposed to the outside of the container 5 through a corresponding insertion hole 7a formed in the upper case 7 of the container 5. One of the other ends becomes a positive electrode and the other becomes a negative electrode of the assembled battery 1. The positive and the negative electrodes of the assembled battery, in which two assembled batteries 1 are serially connected to each other, are connected to the power load 103, which is to be described later.

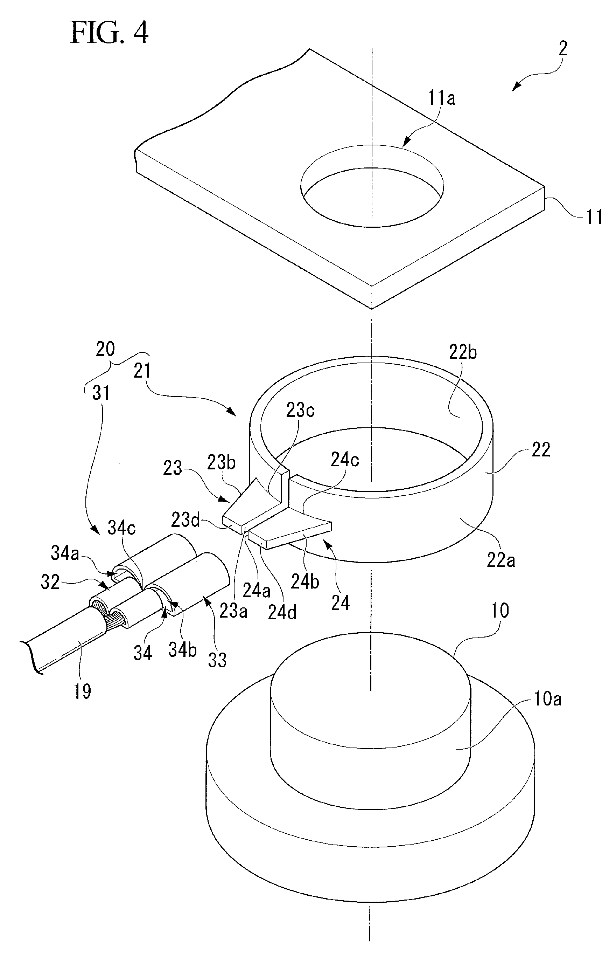

In addition, as shown in FIGS. 2 and 4, the bus bar 11 has through-holes 11a at both ends for inserting bolts. Further, bolts 13 are inserted through the through-holes 11a at the both ends, and thus, the electrode terminals 10 and the bus bars 11 are fixed to each other by the bolts.

As shown in FIG 2, the control unit 4 is, for example, a control circuit formed on a substrate, and is contained in the control unit chamber 9b. As shown in FIG 12, the control unit 4 includes, for example, the CMUs 112a and 112b, that measure and acquire parameter values such as voltage values from the unit cells 2 (e.g., in FIG 2, the control unit 4 is connected to four unit cells 2) connected thereto, and transmit the acquired parameter values to the BMU 113 (Hereinafter, the CMUs and the BMU are referred to as measurement parts). In addition, in the following description, the parameter value of the unit cell 2 is exemplarily described as the voltage value.
Further, in FIG 2, a connection terminal unit 20, which includes a first terminal 21 and a second terminal 31 connected to one end of the electric wire 19 (to be described later), is shown at only one end of the unit cells 2 in the longitudinal direction. However, actually, there is a plurality of the connection terminal units 20, each of that is arranged to corresponding one of unit cells 2 respectively. And the other ends of the electric wires 19 are connected to the CMU 112a or 112b. That is, here, the connection terminal units 20 for the other unit cells 2 are not shown.

FIG 4 is an exploded perspective view of the connection terminal unit 20 fitted with the electrode terminal 10.
As shown in FIG 4, the connection terminal unit 20 includes the first terminal 21 inserted into the electrode terminal 10, and the second terminal 31 electrically coupled to the electric wire 19 connected to the control unit 4 and fitted into the first terminal 21.

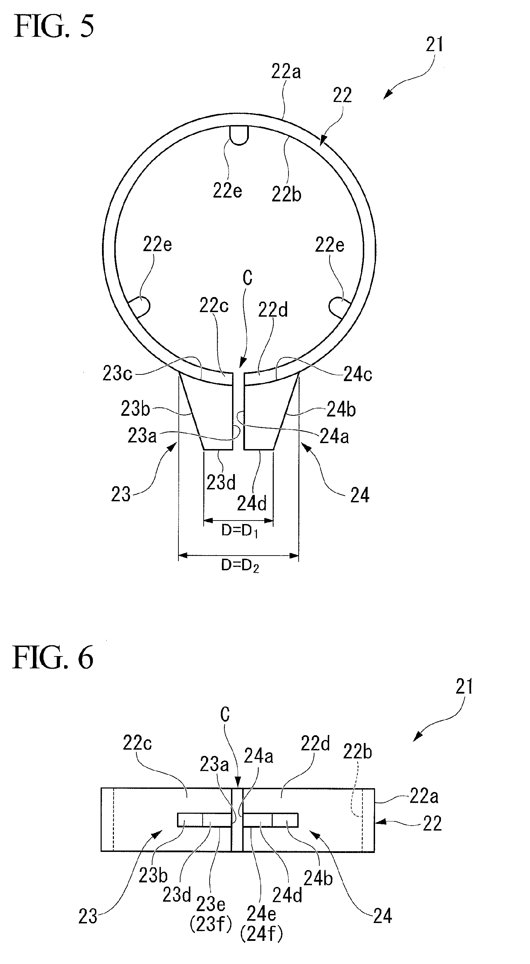

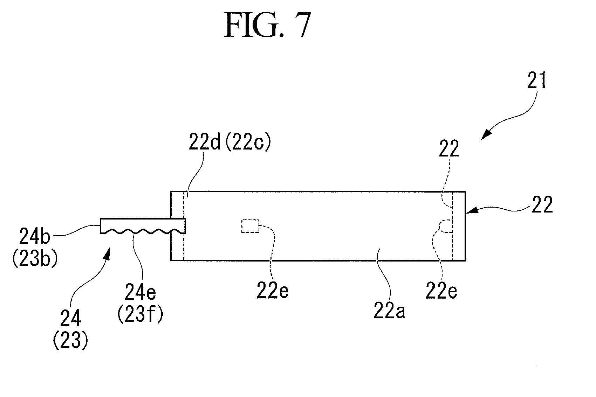

FIG 5 illustrates a plan view of the first terminal 21 when it is seen from an X-axis direction of FIG 1, FIG 6 illustrates a front view of the first terminal 21 when it is seen from a Y-axis direction of FIG 1, and FIG 7 illustrates a side view of the first terminal 21 when seen from a Z-axis direction of FIG 1. In addition, FIGS. 5 to 7 illustrate partial views of the first terminal 21 before being fitted into the second terminal 31.
As shown in FIGS. 5 to 7, in this embodiment, the first terminal 21 includes a terminal body 22 and a pair of projection plates 23 and 24. The first terminal 21 is formed of metal having good conductivity (e.g., copper).

As shown in FIG 5, in this embodiment, the terminal body 22 has a C-shaped annular shape. One end 22c of the terminal body 22 and the other end 22d of the terminal body 22 face to each other through a gap C.
The terminal body 22 includes three protrusions 22e radially protruding inward from the inner circumference (i.e., the inner periphery) 22b. The three protrusions 22e are arranged at predetermined intervals on the inner periphery.

As shown in FIG 5, the projection plate 23 protrudes from a side of the one end 22c and the projection plate 24 protrudes from a side of the other end 22d. The sides are on the outer circumference (i.e., the outer periphery) 22a of the terminal body 22, and the projection plates 23 and 24 protrude toward the outside of the terminal body 22 in a radial direction.
The projection plates 23 and 24 have a substantially trapezoidal shape in which the width is reduced from a rear side to a front side therof when it is seen from the X-axis direction of FIG 1, and are symmetrically arranged about the gap C.

As shown in FIGS. 5 and 6, an inner surface 23a of the projection plate 23 is flush with the end face of the one end 22c (i.e., the end face of the one end 22c and the inner surface 23a are arranged on the same plane), and an inner surface 24a of the projection plate 24 is flush with the end face of the other end 22d. The inner surface 23a and the inner surface 24a radially extend outward with substantially the same gap as the gap C.
In addition, due to the gap C, the diameter of the terminal body 22 can be reduced.

As shown in FIG 5, an outer surface (i.e., an outer part) 23b of the projection plate 23 and an outer surface (i.e., an outer part) 24b of the projection plate 24, which are opposite with each other, gradually approach each other from base ends 23c and 24c toward front ends 23d and 24d thereof. More specifically, provided that a length D between the outer parts of the front ends 23d and 24d (i.e., a length between the outer surfaces 23b and 24b arranged at the same distance from a center of the terminal body 22) is D₁, a length D between the outer parts of the base ends 23c and 24c is D₂, it is described that the value of D₂ is larger than the value of D₁ (i.e., D₂>D₁). And the length D between the outer parts at an arbitrary position in the radial direction (i.e., the direction which is from the center of the terminal body 22 to the outside thereof and which is in the line joining the center of the terminal body 22 and a center point of the length D between the outer parts) is reduced in reverse proportion to a distance from the base ends 23c and 24c.

As shown in FIG 7, the projection plates 23 and 24 include waveform parts 23f and 24f having a wave shape formed in at least portions of the back surfaces 23e and 24e thereof, respectively. The waveform parts 23f and 24f may be formed, for example, by using a mold of which a portion has a waving shape, when the terminal body 22 is formed by the mold.

Meanwhile, as shown in FIG 4, the second terminal 31 is generally referred to as a flat solder-less terminal which is a female type, and includes a compression part 32 compressed and connected to one end of the electric wire 19 and a fitting part 33 fitted onto the first terminal 21. The compression part 32 and the fitting part 33 are electrically connected to each other, and are integrally formed of, for example, the same metal (e.g., copper). The second terminal 31 is also formed of metal having good conductivity (for example, copper).

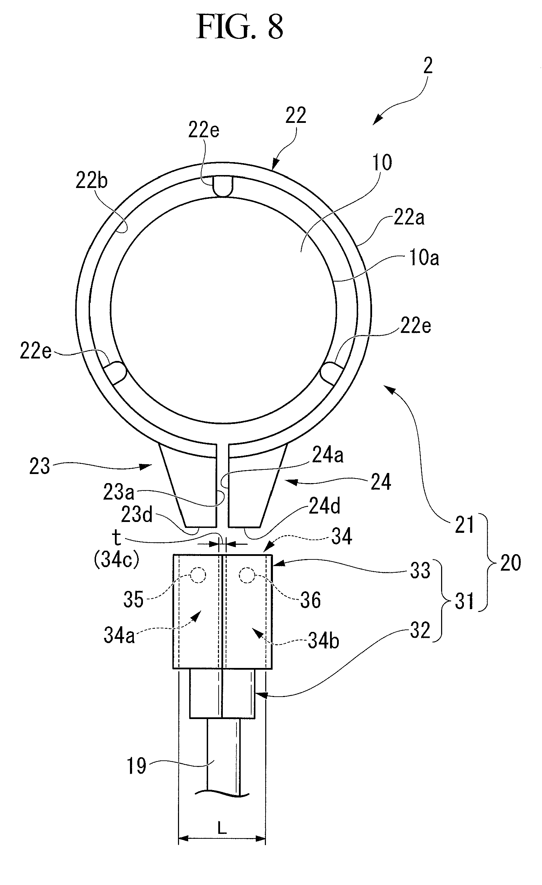

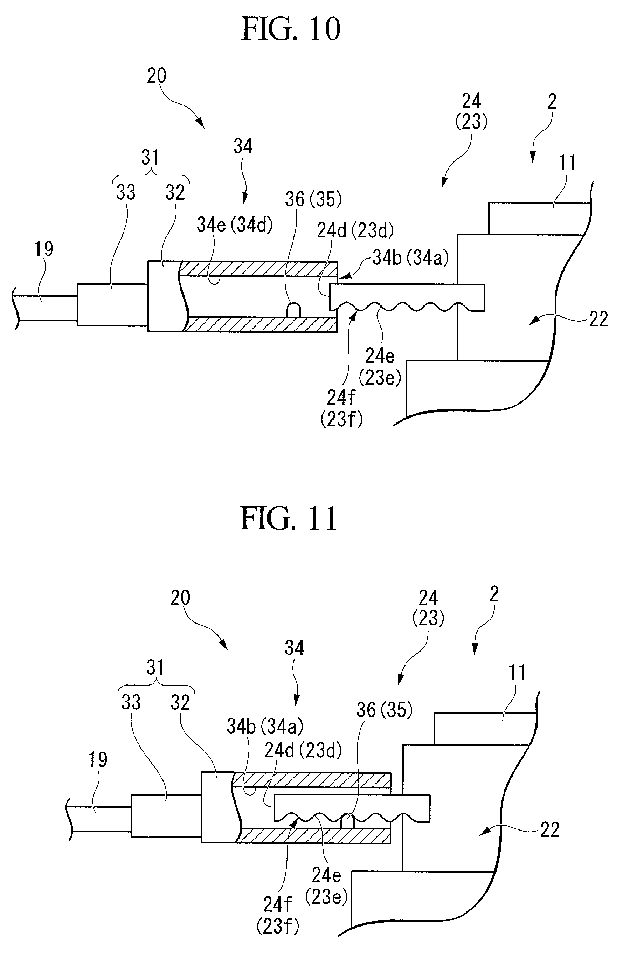

The fitting part 33 includes an insertion hole part 34 into which the projection plates 23 and 24 of the first terminal are fitted.
The insertion hole part 34 is opened to have a length larger than the length D₁ between the outer parts of the front ends 23d and 24d of the projection plates 23 and 24, and smaller than the length D₂ between the outer parts of the base ends 23c and 24c (See FIG 8).
A center of the insertion hole part 34 is partitioned by a partition wall 34c in a width direction as shown in FIG 4 to form holes 34a and 34b into which the projection plates 23 and 24 can be inserted.
That is, provided that an opening length of the insertion hole part 34 in the width direction is L (See FIG 8), it is described that the value of D₂ is larger than the value of L and that the value of L is larger than the value of D₁ (i.e., D₁<L<D₂). In addition, a plate thickness t of the partition wall 34c is substantially smaller than the gap C.
Projection parts 35 and 36 protrude from inner circumferences 34d and 34e of the holes 34a and 34b, respectively (See FIGS. 8 and 10).
Further, the holes 34a and 34b have semi-circular cross-sections at openings thereof in this embodiment. The fitting part 33 and the partition wall 34c are formed by bending and deforming a metal plate, which is a substantially flat plate shape, from both sides thereof into a semi-circular shape. As the result, the semi-circular cross-section is acquired. Of course, the cross-sectional shape is not limited to the semi-circular shape, and the metal plate may be deformed to be similar to the shapes of the front ends 23d and 24d of the projection plates 23 and 24. Accordingly, the projection plates 23 and 24 can be inserted into the insertion hole part 34 with securing a contact area between the insertion hole part 34 and the projection plates 23 and 24.

Hereinafter, a method for connecting the first terminal 21 and the second terminal 31 of the connection terminal unit 20, and an operation of the assembled battery 1 will be described.
As shown in FIG 8, the terminal body 22 of the first terminal 21 is inserted along an outer circumference 10a of the electrode terminal 10. On the other hand, an opening of the insertion hole part 34 of the second terminal 31 is faced to the front ends 23d and 24d of the projection plates 23 and 24.

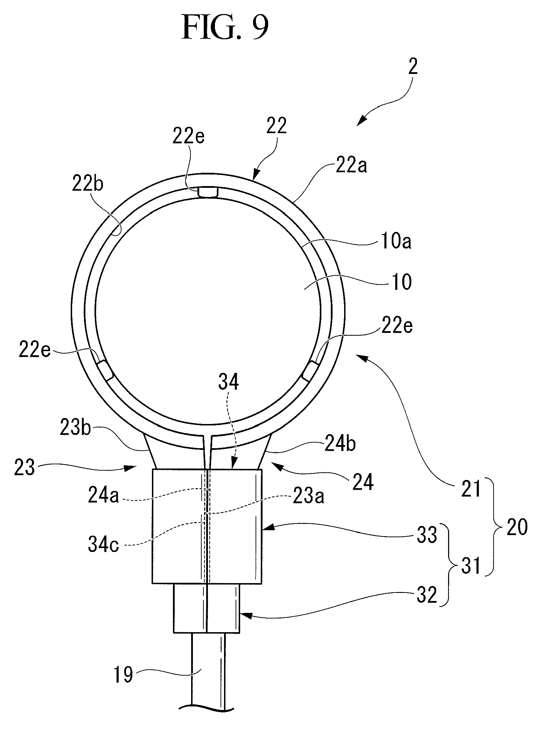

Next, as shown in FIG 9, the second terminal 31 is relatively moved to the first terminal 21 to insert the front ends 23d and 24d into the holes 34a and 34b of the insertion hole part 34, respectively. In this state, when the second terminal 31 is relatively moved toward the terminal body 22, the second terminal 31 arrives at a position of the length D between the outer parts having the same size as the length L of the insertion hole part 34.
When the second terminal 31 is relatively moved from the position toward the terminal body 22, in order to make the opening length D between the outer parts equal to the opening length L of the insertion hole part 34, the projection plates 23 and 24 approach each other and the diameter of the terminal body 22 is reduced (Hereinafter, this state is referred as the diameter reduction state).
In addition, when the second terminal 31 is relatively moved toward the terminal body 22 to further reduce the diameter of the terminal body 22, after the three protrusions 22e are in three-point contact with the outer circumference 10a of the electrode terminal 10, the three protrusions 22e are compressed and squashed by the outer circumference 10a. As a result, the contact area between the electrode terminal 10 and the terminal body 22 can be increased due to the squashing and a electrical resistance between the electrode terminal 10 and the terminal body 22 is reduced. Further, because the contact is maintained with the three protrusions 22e squashed, the contact resistance can be stably maintained without variation.
As described above, the second terminal 31 is pushed toward the terminal body 22 sufficiently to increase a frictional force between the projection plates 23 and 24 and the inner circumferences 34d and 34e. As the result, the fitting or the connection between the second terminal 31 and the first terminal 21 is completed. At this time, the partition wall 34c is compressed from both sides of the inner surfaces 23a and 24a to generate or gain frictional force sufficiently.

With the relative movement between the second terminal 31 and the first terminal 21, the waveform parts 23f and 24f and the projection parts 35 and 36 are engaged with each other. That is, as shown in FIG 10, when the second terminal 31 is relatively moved toward the terminal body 22 from a state in which the front ends 23d and 24d are inserted into the holes 34a and 34b respectively, the projection parts 35 and 36 are engaged with concave parts of the waveform parts 23f and 24f respectively. Then, as the second terminal 31 is further moved toward the terminal body 22, the projection parts 35 and 36 are engaged with the closer concave parts to the base ends 23c and 24c of the waveform parts 23f and 24f as shown in FIG 11.

As described above, the first terminal 21 is connected to the second terminal 31, and the connection terminal unit 20 is connected to the electrode terminal 10. Because of the reduction of the diameter of the terminal body 22, the terminal body 22 contacts the outer circumference 10a of the electrode terminal 10 with a substantial pressure. Therefore, the contact resistance between the terminal body 22 and the electrode terminal 10 can be reduced sufficiently. In addition, because the projection parts 35 and 36 are engaged with the concave parts of the waveform parts 23f and 24f to securely maintain the diameter reduction state, parameter measurement, for example, voltage or current measurement can be advantageously and precisely performed.

According to the battery system 100, because the first terminal 21 includes the terminal body 22 in contact with the outer circumference 10a of the electrode terminal 10, the voltage value of each unit cell 2 can be measured by using the connection terminal unit 20 connected to the electrode terminal 10 directly through the contact, but not connected to the bus bar 11. Accordingly, the contact resistance can be reduced to suppress a measurement error, and the parameters such as a voltage value of the respective cells 2 (i.e., 2A to 2F) constituting the assembled battery can be precisely measured.
The BMU 113 determines, for example, an abnormal unit cell 2 by using the precise measurement value and transmits the information to the higher-level control device 104 in the battery system. And the higher-level control device 104 transmits an abnormal signal to the display part 105 when the higher-level control device 104 receives the information. Then, the display part 105, which received the abnormal signal, informs an operator or driver of the abnormality through emission of light or sound. In addition, the higher-level control device 104 limits the power of the assembled battery 1, which is supplied to the load of the battery system. That is, because the parameters can be precisely measured, the stability of the battery system can be further improved.

Further, the first terminal 21 includes the pair of projection plates 23 and 24, in which the length D between the outer parts of the outer surfaces 23b and 24b is gradually increased from the front ends 23d and 24d toward the base ends 23c and 24c. And the second terminal 31 includes the insertion hole part 34 having an opening larger than the length D₁ between the outer parts at the front ends 23d and 24d and smaller than the length D₂ of the outer surfaces at the base ends 23c and 24c. Accordingly, when the projection plates 23 and 24 are inserted into the insertion hole part 34 to relatively displace the second terminal 31 toward the base ends 23c and 24c, the length D between the outer parts becomes equal to the length L of the insertion hole part 34. And as the second terminal 31 is relatively displaced toward the base ends 23c and 24c of the pair of projection plates 23 and 24, the projection plates 23 and 24 approach each other such that the length D between the outer parts becomes equal to the opening length L of the insertion hole part 34. Thereby, the diameter of the terminal body 22 is reduced to bring the protrusion 22e into contact with the electrode terminal 10, and the second terminal 31 is fitted onto the first terminal 21 to fix the contact state.
Accordingly, the connection terminal unit 20 can be relatively easily put on the electrode terminal 10.

Furthermore, because the first terminal 21 includes the waveform parts 23f and 24f formed in the wave shape at the back surfaces 23e and 24e of the projection plates 23 and 24, respectively, and because the second terminal 31 has the projection parts 35 and 36 engaged with the waveform parts 23f and 24f, the first terminal 21 and the second terminal 31 cannot be easily disconnected and released. Accordingly, vibration-proof characteristics of the battery system can be further improved, and precise measurement of the voltage value of the unit cell 2 can be continuously performed.

In addition, because the three protrusions 22e are formed at the inner circumference 22b of the terminal body 22 and the three squashed protrusions 22e contact the electrode terminal 10, the contact resistance value can be stably maintained. Accordingly, the voltage value of the unit cell 2 can be measured without a measurement error.

When the protrusions 22e are covered with an oxide coating or coated with impurities such as contaminations, because the coating is broken when the protrusions 22e are squashed, an electric contact between the electrode terminal 10 and the first terminal 21 can be increased to further secure stability of the contact resistance.

Further, although the plurality of protrusions 22e have been described in the above-described embodiment, the inner circumference 22b may contact the electrode terminal 10 without formation of the protrusions 22e. When a design specification does not require such a level of good electric connection, the electric connection can be securely maintained through only the contact of the inner circumference 22b of the terminal with the electrode terminal due to reduction in diameter. Accordingly, cost for forming the protrusions 22e at the terminal body 22 can be reduced.
Furthermore, while the configuration of forming the three protrusions 22e has been described in the above-described embodiment, the protrusion 22e may be one or two, or four or more.

In addition, in the above-described embodiment, as the example shown in FIG 2, the four unit cells 2 are formed and electrically connected to each other in series. However, the present invention is not limited thereto, but the number of the unit cells 2 may be more or less than four.

Further, although the voltage value of the unit cells 2 is measured by using the connection terminal unit 20 in the above-described embodiment, a current value may be measured. Furthermore, when the plurality of unit cells 2 are serially connected to each other, the current value may be measured using the connection terminal unit 20 with respect to any one of the unit cells 2.

In addition, although the waveform parts 23f and 24f are formed at both of the projection plates 23 and 24 in the above-described embodiment, the waveform part may be formed at only one of them. Further, the waveform parts 23f and 24f are not limited to be formed on the back surfaces 23e and 24e of the projection plates 23 and 24. Therefore, the waveform part may be formed on, for example, the upper surfaces or the outer surfaces 23b and 24b of the projection plates 23 and 24. The waveform parts may be formed on portions of the outer circumferences (i.e., at least the upper surface, the back surface or the outer surface) of the projection plates 23 and 24. In these cases, the projection parts of the second terminal 31 are formed at the positions corresponding to the waveform parts to be engaged with each other. The terminals may be securely engaged with each other by the waveform parts of the first terminal 21 and the projection parts of the second terminal 31 to maintain the diameter reduction state.
Accordingly, the projection parts may be appropriately formed at the first terminal 21, and the waveform parts may be appropriately formed at the second terminal 31.
In addition, when the diameter reduction state can be maintained by only the frictional force between the projection plates 23 and 24 and the inner circumferences 34d and 34e respectively without forming the waveform parts and the projection parts, the projection parts and the waveform parts need not be formed and may be appropriately omitted.

Further, although the partition wall 34c is formed at the insertion hole part 34 to form the holes 34a and 34b in the above-described embodiment, the partition wall 34c may be omitted.
Furthermore, although the terminal body 22 has a C-shaped annular shape in the above-described embodiment, the terminal body 22 may have a C-shaped polygonal shape as long as the inner circumference of the terminal body 22 can contact the electrode terminal 10.

In addition, although the projection plates 23 and 24 are formed as a pair of projection plates in the above-described embodiment, one or more projection plates may be formed to correspond to the shape of the terminal body 22.

Further, an operation sequence described in the above-described embodiment, or shapes or combinations of the respective components are provided for illustrative purposes, and may be variously varied according to design requirements without departing from the spirit of the invention.

Description of Reference Numerals

- 1: Assembled battery
- 2(2A to 2F): cell
- 10: Electrode terminal
- 10a: Outer circumference (outer periphery)
- 19: Electric measuring wire
- 20: Connection terminal unit
- 21: First terminal
- 22: Terminal body
- 22a: Outer circumference (outer periphery)
- 22b: Inner circumference (inner periphery)
- 22c: One end
- 22d: Other end
- 22e: Protrusion
- 23,24: Projection plate
- 23b, 24b: Outer surface (outer part)
- 23c, 24c: Base end
- 23d, 24d: Front end
- 23f, 24f: Waveform part
- 31: Second terminal
- 33: Fitting part
- 34: Insertion hole part
- 34c: Inner circumference (inner periphery)
- 35, 36: Projection part
- 100: Battery system
- D(D₁, D₂): Length between outer surfaces

## Claims

1. A battery system comprising:
an assembled battery including a plurality of unit cells having electrode terminals;
a C-shaped first terminal including a terminal body having at least a portion of its inner circumference contacting the electrode terminal and two projection plates projecting from an outer circumference of the terminal body toward an outside of the terminal body in a radial direction thereof, and inserted into the electrode terminal;
a second terminal including an insertion hole part into which the projection plates are inserted, fitted to the first terminal and connected to an electric wire; and
a measurement part connected to the electric wire to measure a parameter of the assembled battery,
wherein the insertion hole part and the projection plates are fitted to each other to reduce a diameter of the first terminal such that the first terminal is fixed to the electrode terminal.

2. The battery system according to claim 1, wherein a length of the projection plates is gradually increased from front ends of the projection plates toward base ends thereof, and
an opening length of the insertion hole part of the second terminal is larger than the length of the front ends of the projection plates and smaller than the length of the base ends of the projection plates.

3. The battery system according to claim 2, wherein the first terminal further includes a waveform part formed in a wave shape on at least a portion of an outer circumference of the projection plate, and
the second terminal further includes a projection part to project from an inner circumference of the insertion hole part and engaged with the waveform part.

4. The battery system according to claim 3, wherein the first terminal further includes at least three protrusions formed at the inner circumference of the terminal body at predetermined intervals and in contact with the outer circumference of the electrode terminal.

5. The battery system according to claim 4, further comprising a display part to display data based on the parameter measured by the measurement part.
